# EUROPÄISCHE PATENTSCHRIFT

(11) **EP 2 456 629 B1**
(45) Veröffentlichungstag und Bekanntmachung des Hinweises auf die Patenterteilung: **29.03.2017**
(21) Anmeldenummer: 10728206.3
(22) Anmeldetag: 25.06.2010
(51) Int. Cl.: B60K 6/48, B60W 20/00, F02B 33/34, F02B 39/12, F02B 37/013, F02B 39/10, F02B 37/04, F02B 37/10

(54) **FAHRZEUG MIT AUFGELADENEM VERBRENNUNGSMOTOR SOWIE VERFAHREN ZUM BETREIBEN EINES FAHRZEUGS MIT AUFGELADENEM VERBRENNUNGSMOTOR**
VEHICLE COMPRISING A CHARGED COMBUSTION ENGINE AND METHOD FOR OPERATING A VEHICLE COMPRISING A CHARGED COMBUSTION ENGINE
VÉHICULE À MOTEUR À COMBUSTION INTERNE SURALIMENTÉ ET PROCÉDÉ POUR FAIRE FONCTIONNER UN VÉHICULE À MOTEUR À COMBUSTION INTERNE SURALIMENTÉ

(30) Priorität: 24.07.2009 DE 102009034510
(43) Veröffentlichungstag der Anmeldung: 30.05.2012
(73) Patentinhaber: Bayerische Motoren Werke Aktiengesellschaft, 80809 München (DE)
(72) Erfinder: HOESS, Bernhard, 80995 München (DE); NEUMANN, Jens, 85586 Poing (DE); ENGSTLE, Armin, 80807 München (DE)
(74) Vertreter: Diener, Reinhold Jürgen
(86) Internationale Anmeldenummer: PCT/EP2010/059040
(87) Internationale Veröffentlichungsnummer: WO 2011/009693

(56) Entgegenhaltungen:
- WO-A1-2005/124121
- WO-A1-2008/020184
- WO-A1-2008/075130
- WO-A2-2009/014488
- DE-A1-102006 045 937
- GB-A- 2 390 871
- JP-A- 2005 299 797
- US-A- 4 233 815

## Beschreibung

Die vorliegende Erfindung betrifft ein Fahrzeug gemäß dem Oberbegriff des Patentanspruches 1 sowie ein Verfahren gemäß dem Oberbegriff des Patentanspruches 14.

Ein derartiges Fahrzeug bzw. ein derartiges Verfahren ist aus der DE 10 2006 045 937 A1 bekannt.

Fahrzeugantriebe, insbesondere von Personenkraftfahrzeugen, werden heutzutage üblicherweise so ausgelegt, dass sowohl stationäre Leistungsbedarfe (Konstantfahrt) und quasistationäre Leistungsbedarfe (Konstantfahrt mit geringer Beschleunigung) als auch instationäre Leistungsbedarfe (Fahrt mit stärkerer Beschleunigung bis hin zu maximaler Beschleunigung) durch den Antrieb abgedeckt sind. In der Regel haben die instationären Leistungsbedarfe einen erheblich geringeren Zeitanteil als die stationären oder quasistationären Leistungsbedarfe. In den meisten Betriebszuständen des Fahrzeugs liegt somit eine erhebliche Übermotorisierung vor.

Bei Fahrzeugen mit Verbrennungsmotoren als Antrieb beobachtet man seit geraumer Zeit einen Trend zum "Downsizing" der Verbrennungsmotoren , d. h. einen Trend zu Motoren mit geringerem Hubraum und oftmals auch weniger Zylindern. Um dennoch die gewünschten Fahrleistungen zu erzielen, werden die Verbrennungsmotoren zunehmend höher aufgeladen. Als Lader zur Aufladung des Verbrennungsmotors, d.h. zur Druckerhöhung der Eintrittsluft, werden dabei ganz überwiegend Abgasturbolader (ATL) eingesetzt, welche die im Abgas des Verbrennungsmotors enthaltene Enthalpie über eine Turbine-Verdichter-Einheit zur Verdichtung bzw. zur Erhöhung des Druckniveaus der dem Verbrennungsmotor zugeführten Luft verwenden. Verbrennungsmotoren mit rein strömungsmechanisch angetriebenen Abgasturboladern weisen jedoch beim Beschleunigen aus dem Niedrigzahlbereich heraus bekanntermaßen ein zeitverzögertes Ansprechverhalten auf, das häufig mit dem Begriff "Turboloch" umschrieben wird, und fahrverhaltens seitig negativ empfunden wird.

Aus der DE 10 2006 053 037 A1 ist ein Verbrennungsmotor mit Abgasturbolader bekannt, der unterstützend durch eine elektrische Maschine angetrieben werden kann, wodurch sich das Ansprechverhalten des Motors beim Beschleunigen aus dem Niedrigdrehzahlbereich heraus gegenüber herkömmlichen aufgeladenen Motoren verbessert.

Antriebssysteme mit elektrisch angetriebenem Lader sind ferner aus der DE 10 2007 057 224 A1 sowie aus der DE 10 2006 034 825 A1 bekannt. Zum technischen Hintergrund der Erfindung zählen ferner die DE 42 03 528 C2, DE 28 40 375, DE 100 52 555 A1, DE 10 2006 059 664 A1, DE 42 12 984 A1, DE 44 29 855 C1, GB 2390871 A, WO 2008/075130 A1, WO 2009/014488 A2, WO 2008/020184 A1 sowie die US 4233815 A.

Alternative Ansätze werden auch mit diversen Hybridkonzepten verfolgt, bei denen der Verbrennungsmotor z.B. beim Beschleunigen von einem Elektromotor unterstützt wird (elektrische Boost-Funktion). Eine elektrische Boost-Funktion ist aber nur bei relativ niedrigen Geschwindigkeiten spürbar. Bei höheren Geschwindigkeiten übersteigt der für einen spürbaren zusätzlichen Beschleunigungseffekt erforderliche elektrische Leistungsbedarf die in derzeitigen Fahrzeugen tatsächlich installierte elektrische Leistung in der Regel deutlich. Für eine auch bei höheren Geschwindigkeiten spürbare Boostfunktion ist in der Regel eine elektrische Leistung von mehr als 100 KW erforderlich. Aufgrund der limitierten technischen Möglichkeiten der derzeit verfügbaren elektrischen Speichersysteme ist eine elektrische Antriebsunterstützung daher nur für eine relativ kurze Zeitdauer bzw. nur mit begrenzter Leistung möglich.

Aufgabe der Erfindung ist es, ein Fahrzeug mit aufgeladenem Verbrennungsmotor zu schaffen, das insbesondere im stationären Betrieb bei niedriger bis mittlerer Last hocheffizient ist und das beim Beschleunigen aus dem stationären Betrieb heraus ein sehr gutes Ansprechverhalten aufweist, sowie ein entsprechendes Verfahren zum Betreiben eines solchen Fahrzeugs anzugeben.

Diese Aufgabe wird durch die Merkmale der Patentansprüche 1 bzw. 14 gelöst. Vorteilhafte Ausgestaltungen und Weiterbildungen der Erfindung sind den Unteransprüchen zu entnehmen.

Ausgangspunkt der Erfindung ist ein Fahrzeug, mit einem Verbrennungsmotor, mindestens einem "Lader" und einer elektrischen Maschine, die drehmomentübertragend mit dem Lader koppelbar ist und zum Antrieb bzw. zur Antriebsunterstützung des Laders vorgesehen ist.

Der in der vorliegenden Beschreibung sowie in den Patentansprüchen verwendete Begriff "Lader" ist äußerst breit auszulegen; er umfasst grundsätzlich jegliche "Vorrichtung", die zu Erhöhung des Drucks der dem Verbrennungsmotor zugeführten Luft eingesetzt werden kann. Der Begriff "Lader" umfasst insbesondere Strömungsverdichter, wie z.B. Radialverdichter, Kompressoren bzw. Verdrängerlader sowie Abgasturbolader. Ein Abgasturbolader weist bekanntermaßen ein in einem Abgasstrom des Verbrennungsmotors angeordnetes Turbinenrad auf, welches ein Verdichterrad antreibt. Im Unterschied zu herkömmlichen, rein strömungstechnisch angetriebenen Abgasturboladern kann das Verdichterrad bzw. die Turboladerwelle unterstützend oder auch rein elektromotorisch von der elektrischen Maschine angetrieben werden.

"Drehmomentübertragend koppelbar" im Sinne der Erfindung bedeutet, dass während mancher Betriebszustände des Fahrzeugs ein Kraftschluss zwischen der elektrischen Maschine und dem Lader zum Zwecke des Antreibens des Laders erzeugt werden kann.

Der Kern der Erfindung besteht darin, dass zusätzlich auch der Antriebsstrang des oben beschriebenen Fahrzeugs drehmomentübertragend mit der einen elektrischen Maschine koppelbar ist.

Der Begriff "Antriebsstrang" umfasst hier grundsätzlich sowohl einzelne als auch alle Vortriebsleistung übertragenden Komponenten, die im Drehmomentpfad zwischen der Kurbelwelle des Verbrennungsmotors und den Antriebsrädern des Fahrzeugs angeordnet sind. Im Sinne der Erfindung kann der Begriff Antriebsstrang auch die Kurbelwelle und andere Verbindungselemente, die eine unmittelbare oder mittelbare Kraftübertragung bzw. Drehmomentübertragung auf den Antriebsstrang ermöglichen, umfassen.

Gemäß der Erfindung ist die mit der elektrischen Maschine erzeugte Antriebsleistung zumindest nicht primär zur Einspeisung in den Antriebsstrang vorgesehen, sondern primär zum Antrieb des Laders, was im Vergleich zu den diversen bekannten Hybridfahrzeugkonzepten energetisch wesentlich effizienter ist. Die elektrische Energie wird also primär indirekt in den thermodynamischen Verbrennungsprozess eingespeist.

Die Auslegung des Fahrzeugantriebs ist vergleichbar mit der eines Kraftwerksprozesses. Der den Basisantrieb bildende Verbrennungsmotor deckt die "Grundlast", d.h. die für stationäre oder quasi stationäre Fahrzustände (Konstantfahrt sowie Konstantfahrt mit Beschleunigungen von z.B. weniger als 0,5 m/s²) erforderliche Basisleistung zur Verfügung. Temporär entstehende Spitzenlasten werden über den Systemverbund "Verbrennungsgrundmotor mit elektrisch unterstützter Laderfunktion" abgedeckt.

Gemäß der Erfindung kann die elektrische Maschine aber nicht nur als Elektromotor zum Antreiben des Laders oder des Antriebsstrangs eingesetzt werden, sondern darüber hinaus auch als Generator zum Rekuperieren und Umwandeln kinetischer Energie aus dem Antriebsstrang in elektrische Energie. Die in Schub- bzw. Bremsphasen mittels der elektrischen Maschine gewonnene elektrische Energie kann in einen elektrischen Energiespeicher, wie z. B. eine Batterie- oder Kondensatoranordnung, eingespeist und zwischengespeichert werden.

In Betriebszuständen, in denen eine hohe Motorleistung abgerufen wird, kann die generatorisch gewonnene elektrische Energie zum Betreiben der elektrischen Maschine und somit zum Antrieb bzw. zur Antriebsunterstützung des Laders eingesetzt werden. Besonders vorteilhaft ist ein derartiger elektrischer bzw. elektrisch unterstützter Lader, wenn es darum geht, das Fahrzeug zügig aus dem stationären Betrieb heraus zu beschleunigen. Ein elektrischer bzw. elektrisch unterstützter Lader kann aufgrund der spontan verfügbaren elektrischen Energie über die elektrische Maschine aus einem niedrigen Drehzahlbereich nahezu verzögerungsfrei auf Nenndrehzahl beschleunigt werden, während ein herkömmlicher Abgasturbolader aufgrund des zeitlich verzögerten Enthalpieaufbaus im Abgasstrom ein zeitverzögertes Hochlaufverhalten aufweist.

Neben dem beschriebenen Vorteil, dass bei erfindungsgemäßer Ausführung des Fahrzeugs kinetische Energie des Fahrzeugs während Brems- und Schubphasen in Form von Bremsenergierückgewinnung in elektrische Energie gewandelt und somit zurückgewonnen werden kann, kann diese elektrische Energie insbesondere während Beschleunigungsphasen auch hocheffizient zum Aufbau der Beschleunigung des Fahrzeugs genutzt werden, dadurch dass der elektrisch angetriebene Lader spontan auf seinen Nennbetriebspunkt hochgefahren werden kann. Dies ermöglicht überdies, den Hubraum des Grundmotors des Verbrennungsmotors bei Beibehaltung gleich guter oder teilweise sogar verbesserter Response-Eigenschaften weiter zu reduzieren, woraus ein weiterer Effizienzgewinn des Fahrzeugs resultiert. Ein wesentlicher Vorteil der erfindungsgemäßen Ausführung des Fahrzeugs liegt auch in dem verminderten Systemaufwand durch die Nutzung ein- und derselben elektrischen Maschine zum generatorischen und motorischen Betrieb in Abhängigkeit des Betriebszustands des Fahrzeugs. Dies ist nur deswegen möglich, weil die betroffenen Betriebszustände - einerseits Schub- und/oder Bremsbetrieb, andererseits Beschleunigung oder Konstantfahrt - nie gleichzeitig auftreten.

Nach einer Weiterbildung der Erfindung ist (funktional betrachtet) zwischen der elektrischen Maschine und dem Lader eine erste mechanische Kopplungseinrichtung vorgesehen, die einen offenen Zustand einnehmen kann, in dem der Läufer der elektrischen Maschine von einer Antriebswelle des Laders entkoppelt ist bzw. einen geschlossenen Zustand, in dem die elektrische Maschine und der Lader drehmomentübertragend gekoppelt sind. Für eine Kopplung bzw. Entkopplung der elektrischen Maschine mit dem Antriebsstrang bzw. von dem Antriebsstrang des Fahrzeugs ist funktional betrachtet "zwischen" der elektrischen Maschine und dem Antriebsstrang eine zweite Kopplungseinrichtung vorgesehen, die ebenfalls einen offenen bzw. einen geschlossenen Zustand einnehmen kann. Im offenen Zustand ist die elektrische Maschine vom Antriebsstrang entkoppelt. Im geschlossenen Zustand hingegen ist die elektrische Maschine mit dem Antriebsstrang des Fahrzeugs gekoppelt. In Schub- bzw. Bremsphasen ermöglicht dies eine Rekuperation kinetischer Energie des Fahrzeugs. Je nach installierter elektrischer Leistung kann die elektrische Maschine bei geschlossener zweiter Kopplungseinrichtung zum Rangieren des Fahrzeugs, als Antriebsunterstützung für den Verbrennungsmotor oder sogar zum rein elektrischen Fahren oder eingesetzt werden.

Der Antriebsstrang kann hierzu über eine Übersetzungseinrichtung, z. B. einen Kettentrieb, einen Riementrieb, eine Zahnradstufe o.ä., sowie die zweite Kopplungseinrichtung mit der elektrischen Maschine gekoppelt sein.

Zusätzlich zu den beiden oben erwähnten Kopplungseinrichtungen kann eine dritte mechanische Kopplungseinrichtung vorgesehen sein, über die der Verbrennungsmotor mit dem Antriebsstrang koppelbar bzw. gekoppelt ist. Durch "Öffnen" der dritten Kopplungseinrichtung kann der Verbrennungsmotor z. B. in Schub- bzw. Bremsphasen vom Antriebsstrang abkoppelt werden, was sich günstig auf den Rekuperationswirkungsgrad auswirkt. Auch in Betriebszuständen, in denen rein elektrisch gefahren wird, d. h. in denen der Antriebsstrang ausschließlich von der oben erwähnten oder einer anderen im Fahrzeug verbauten elektrischen Maschine angetrieben wird, ist es von Vorteil, den Verbrennungsmotor durch Öffnen der dritten Kupplung abzukoppeln, da dadurch Motorschleppverluste vermieden werden. Mittels der "wahlfrei" schaltbaren Kupplungseinrichtungen ist eine bedarfsgerechte Zu- bzw. Abschaltung des "Generatormotors" möglich.

Bei den mechanischen Kopplungseinrichtungen kann es sich beispielsweise um elektrisch, elektromagnetisch, hydraulisch oder anderweitig ansteuerbare bzw. regelbare Kupplungen handeln. Aufgrund schneller Reaktionsfähigkeit und Verschleißfreiheit sind elektromagnetische Kupplungen zu bevorzugen. Grundsätzlich kommen aber auch andere Einrichtungen in Betracht, welche eine Drehmomentkopplung bzw. Drehmomententkopplung ermöglichen. So kann die Funktion der beiden Kupplungen beispielsweise auch vorteilhaft mittels eines Planetenradsatz-Getriebes dargestellt werden.

Bei der elektrischen Maschine kann es sich z.B. um eine Asynchron-Maschine oder eine Reluktanzmaschine handeln. Insbesondere dazu kann es sich bei der elektrischen Maschine um eine drehzahlgeregelte Maschine handeln, was den Vorteil hat, dass die Leistung der elektrischen Maschine und somit die "Laderleistung" entsprechend der vom Fahrer aktuell angeforderten Antriebsleistung geregelt werden kann. Alternativ oder ergänzend dazu kann zwischen dem Lader und der elektrischen Maschine kann auch eine in Stufen schaltbare Übersetzungseinheit oder eine stufenlose Übersetzungseinrichtung vorgesehen sein.

Nach einer Weiterbildung der Erfindung ist eine zwei- oder mehrstufige Aufladung vorgesehen. Der mindestens eine Lader wird in diesem Zusammenhang als "zweiter Lader" bezeichnet. Zusätzlich zu dem zweiten Lader ist ein erster Lader vorgesehen, der ebenfalls zur Erhöhung des Drucks der dem Verbrennungsmotor zugeführten Luft vorgesehen ist. Der erste Lader kann "parallel" zum zweiten Lader oder seriell vor dem zweiten Lader angeordnet sein. Im letztgenannten Fall handelt es sich bei dem zweiten Lader um einen "Hochdrucklader", der den Druck der Ansaugluft von einem ersten, durch den ersten Lader erzeugten Druckniveau auf ein zweites, höheres Druckniveau anhebt. Bei dem ersten Lader, der im Falle einer "Registeraufladung" auch als "Niederdrucklader" bezeichnet wird, kann es sich ebenfalls um einen Abgasturbolader handeln.

Zusammenfassend werden mit der Erfindung folgenden Vorteile erreicht:
- einfache Darstellbarkeit einer effektiven und effizienten elektrischen bzw. elektrisch unterstützten "Boost-Funktion" (Antriebsunterstützung für den Verbrennungsmotor) und Optimierung des Ansprechverhaltens des Verbrennungsmotors;
- verminderter Systemaufwand (Komponentenanzahl, Kosten, Bauraum) zur Darstellung einer Generatorfunktion und der elektrischen "Boost"-Funktion durch Mehrfachverwendung der elektrischen Maschine;
- freie Skalierbarkeit des Systemverbunds;
- energetische Optimierung des Antriebsgesamtsystems mit erheblicher Verbrauchsminderung ohne Einbußen stationärer oder dynamischer Fahrleistung.
- einfache Darstellbarkeit einer E-Fahrfunktion.

Im Folgenden wird die Erfindung im Zusammenhang mit den Zeichnungen näher erläutert. Es zeigen:
- Figur 1: das Grundprinzip eines Fahrzeugs gemäß der Erfindung in schematischer Darstellung;
- Figur 2: den Betriebszustand Stationärfahrt innerhalb des sogenannten Low-End-Torque Betriebsbereichs;
- Figur 3: den Betriebszustand Stationärfahrt außerhalb des sogenannten Low-End-Torque Betriebsbereichs;
- Figur 4: den Betriebszustand beschleunigte Fahrt innerhalb des sogenannten Low-End-Torque Betriebsbereichs;
- Fig. 5: den Betriebszustand beschleunigte Fahrt außerhalb des sogenannten Low-End-Torque Betriebsbereichs;
- Figur 6: den Betriebszustand Schubbetrieb bzw. verzögerte Fahrt.

Die in den Figuren verwendete Abkürzung EMG steht für "Elektro-Motor-Generator" und bezeichnet die erfindungsgemäß ausgeführte elektrische Maschine, die in manchen Betriebszuständen des Fahrzeugs generatorisch und in anderen Betriebszuständen des Fahrzeugs motorisch betrieben werden kann.

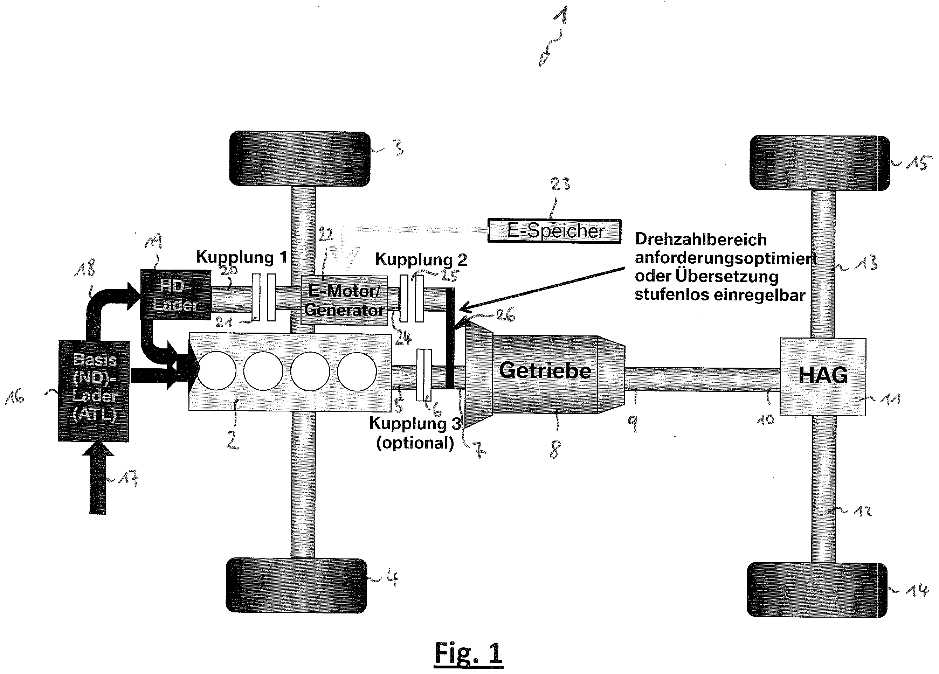

Figur 1 zeigt schematisch das Antriebskonzept eines Fahrzeugs 1 dessen Primärantrieb durch einen Verbrennungsmotor 2 gebildet ist, der bei dem hier gezeigten Ausführungsbeispiel im Bereich der durch Vorderräder 3, 4 definierten Vorderachse angeordnet ist. Eine Kurbelwelle 5 des Verbrennungsmotors ist über eine Kupplung 6, die im Folgenden auch als "dritte Kupplung" bezeichnet wird, mit einem Eingang 7 eines Getriebes 8 gekoppelt. Ein Ausgang des Getriebes ist über eine Gelenkwelle mit einem Eingang 10 eines Hinterachsgetriebes 11 gekoppelt, welche die Antriebsleistung über Abtriebswellen 12, 13 auf Hinterräder 14, 15 verteilt.

Dem Verbrennungsmotor 2 zugeordnet ist eine zweistufige Laderanordnung. Die Laderanordnung weist einen Niederdruckabgasturbolader 16 auf, der Umgebungsluft 17 ansaugt und vorverdichtet. Vorverdichtete Luft 18 wird mittels eines Hochdruckladers 19 weiter verdichtet und dem Ansaugtrakt des Verbrennungsmotors 2 zugeführt. Der Niederdruckabgasturbolader 16 weist ein hier nicht näher dargestelltes Turbinenrad auf, das im Abgastrakt des Verbrennungsmotors 2 angeordnet ist und das ein Verdichterrad (ebenfalls nicht dargestellt) antreibt.

Bei dem Hochdrucklader 19 kann es sich ebenfalls um einen Abgasturbolader oder um einen herkömmlichen Strömungsverdichter oder Verdrängerlader handeln. Eine Laderwelle 20 des Hochdruckladers 19 ist über eine Kupplung 21, die im Folgenden auch als "erste Kupplung" bezeichnet wird, mit einer elektrischen Maschine 22 koppelbar. Die elektrische Maschine 22 ist elektrisch mit einem elektrischen Energiespeicher 23, bei dem es sich um eine Batterie- oder Kondensatoranordnung handeln kann, verbunden. Ein Läufer 24 der elektrischen Maschine kann über die erste Kupplung 21 somit mit dem Hochdrucklader 19 drehgekoppelt werden. Alternativ oder gleichzeitig kann der Läufer 24 über eine Kupplung 25, die im Folgenden auch als "zweite Kupplung" bezeichnet wird, sowie über eine Übersetzungsstufe 26 mit dem "Antriebsstrang" gekoppelt werden, d. h. bei dem hier gezeigten Ausführungsbeispiel mit der Eingangswelle 7 des Getriebes 8.

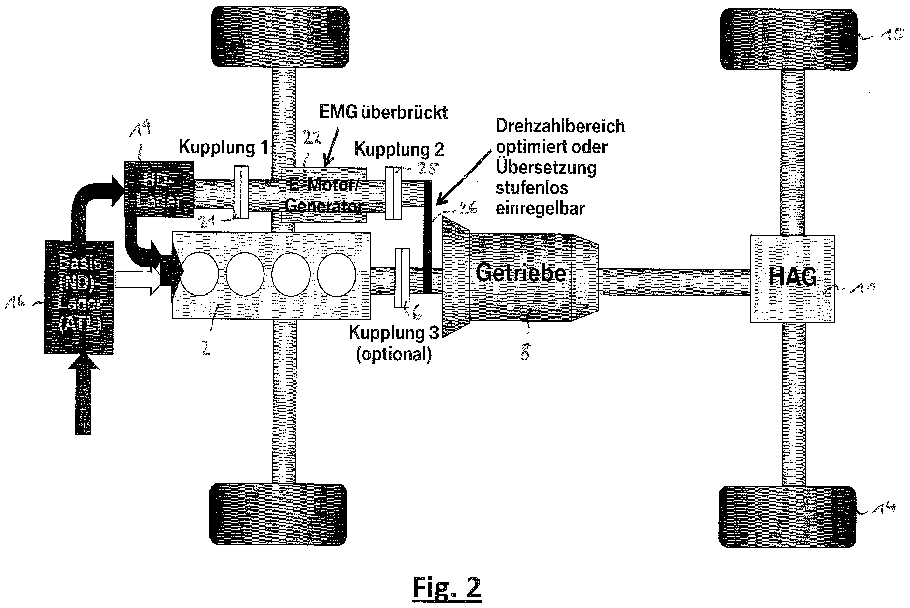

Figur 2 zeigt den Betriebszustand "Stationärfahrt" bei hoher Last und geringer Drehzahl (innerhalb des Low-End-Torque-Betriebsbereichs). Eine typische Situation ist das Befahren einer Passstraße. In diesem Zustand sind die drei Kupplungen 6, 21 und 25 geschlossen. Die elektrische Maschine 22 kann hierbei "überbrückt", d. h. passiv sein. Alternativ dazu kann der Antriebsstrang aber auch über die elektrische Maschine 22 mit dem Lader 19 gekoppelt sein. Das vom Verbrennungsmotor 2 gelieferte Drehmoment fließt über die dritte Kupplung 6, das Getriebe 8 und das Hinterachsgetriebe 11 zu den Hinterrädern 14, 15. Ein Teil der vom Verbrennungsmotor 2 erzeugten Leistung wird über die Übersetzungsstufe 26 abgezweigt und über die Kupplungen 25 und 21 zum (mechanischen) Antrieb des Hochdruckladers 19 verwendet. Der Verbrennungsmotor 2 wird in diesem Betriebszustand somit durch den Abgasturbolader 16, d. h. durch Strömungsenergie des Abgases des Verbrennungsmotors sowie durch einen Teil der den Hochdrucklader 19 antreibenden, vom Verbrennungsmotor 2 selbst erzeugten mechanischen Leistung aufgeladen.

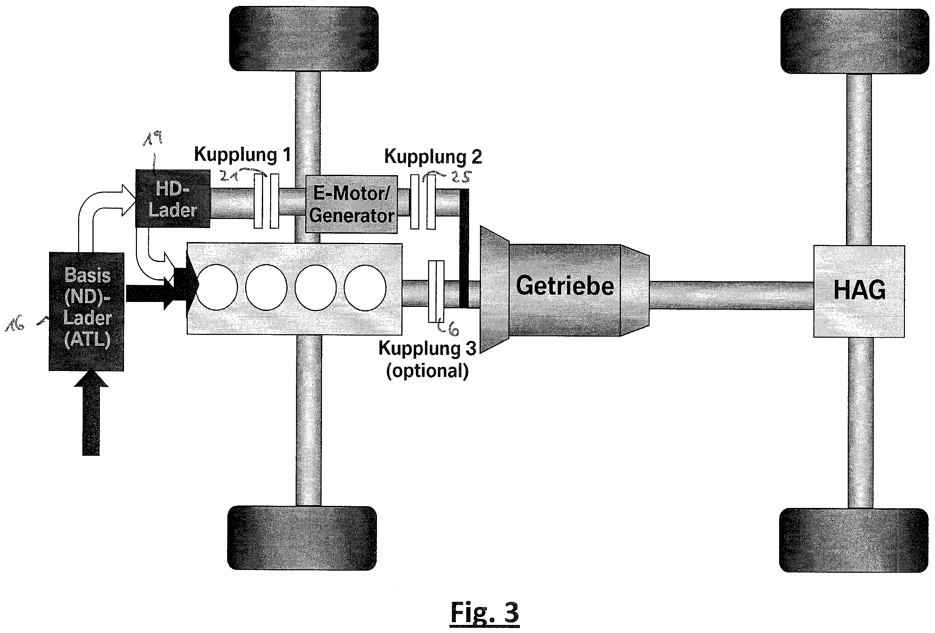

Figur 3 zeigt den Betriebszustand Stationärfahrt bei höherer Last und höherer Drehzahl (Stationärfahrt außerhalb des Low-End-Torque-Betriebsbereichs). In diesem Betriebszustand sind die erste und die zweite Kupplung 21, 25 jeweils geöffnet. Die dritte Kupplung 6 ist geschlossen. In diesem Betriebszustand ist die Drehzahl des Verbrennungsmotors hinreichend groß, so dass die vom Fahrer geforderte Motorleistung bereits allein durch Aufladung des Verbrennungsmotors mittels des Niederdruckabgasturboladers 16 erzeugt werden kann. Der Hochdrucklader 19 kann in diesem Betriebszustand passiv, d.h. deaktiviert sein.

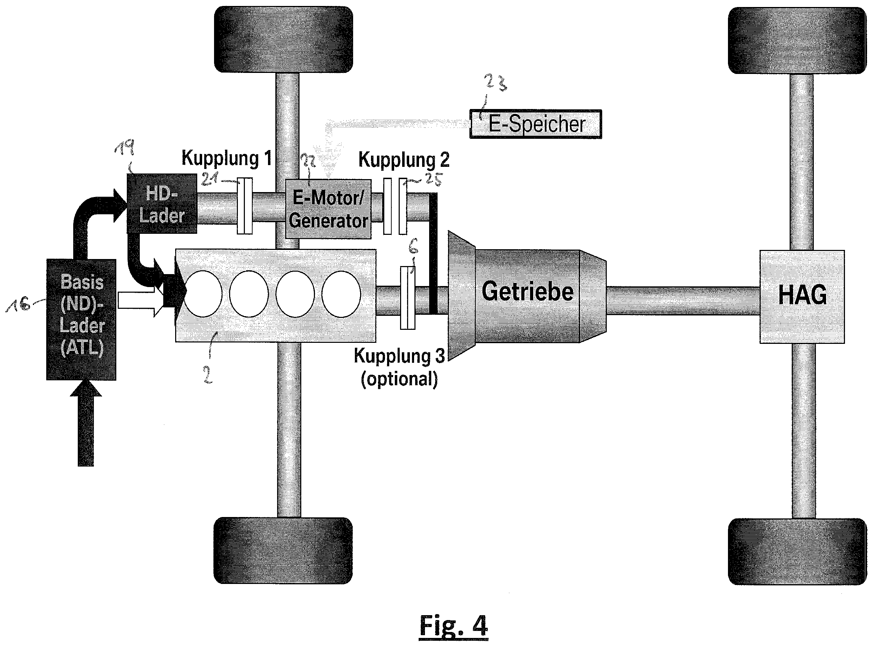

Figur 4 zeigt den Betriebszustand beschleunigte Fahrt bei geringer Drehzahl und angeforderter hoher Last, d. h innerhalb des Low-End-Torque-Betriebsbereichs. In diesem Betriebszustand ist die erste Kupplung 21 geschlossen, die zweite Kupplung 25 geöffnet und die dritte Kupplung 6 ist ebenfalls geschlossen. Der Verbrennungsmotor 2 wird in diesem Betriebszustand zweistufig über den Niederdruckabgasturbolader 16 und über den Hochdruckiader 19 aufgeladen. Der Hochdrucklader 19 wird in diesem Betriebszustand elektrisch von der elektrischen Maschine 22 angetrieben, welche aus dem Energiespeicher 23 mit elektrischer Energie versorgt wird.

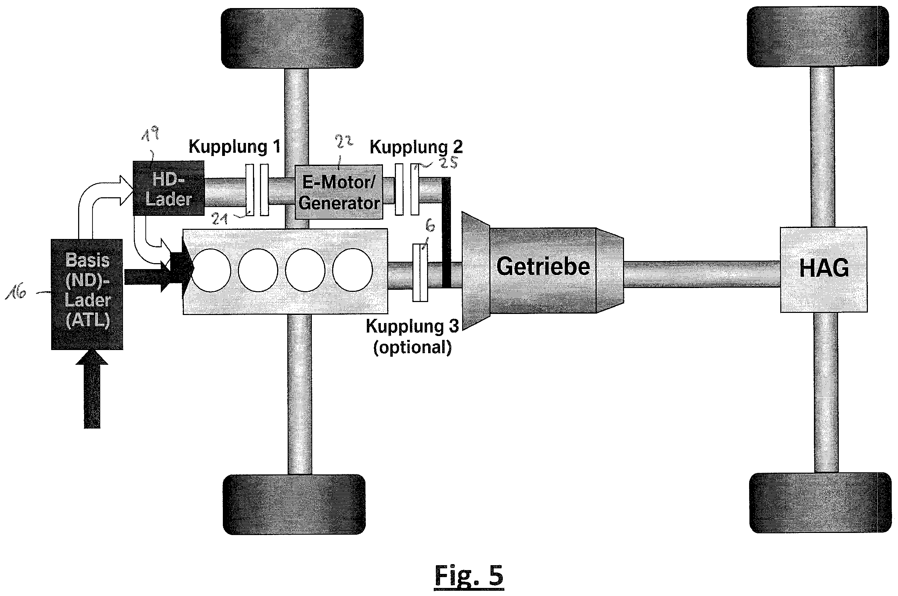

Figur 5 zeigt den Betriebszustand beschleunigte Fahrt bei höherer Drehzahl und höherer Last (beschleunigte Fahrt außerhalb des Low-End-TorqueBetriebsbereichs). In diesem Betriebszustand sind die beiden Kupplungen 21, 25 geöffnet und die dritte Kupplung 6 ist geschlossen. Der Hochdrucklader 19 wird somit nicht von der elektrischen Maschine 22 angetrieben. Die erforderliche Laderleistung wird viel mehr ausschließlich von dem Niederdruckabgasturbolader 16 erbracht.

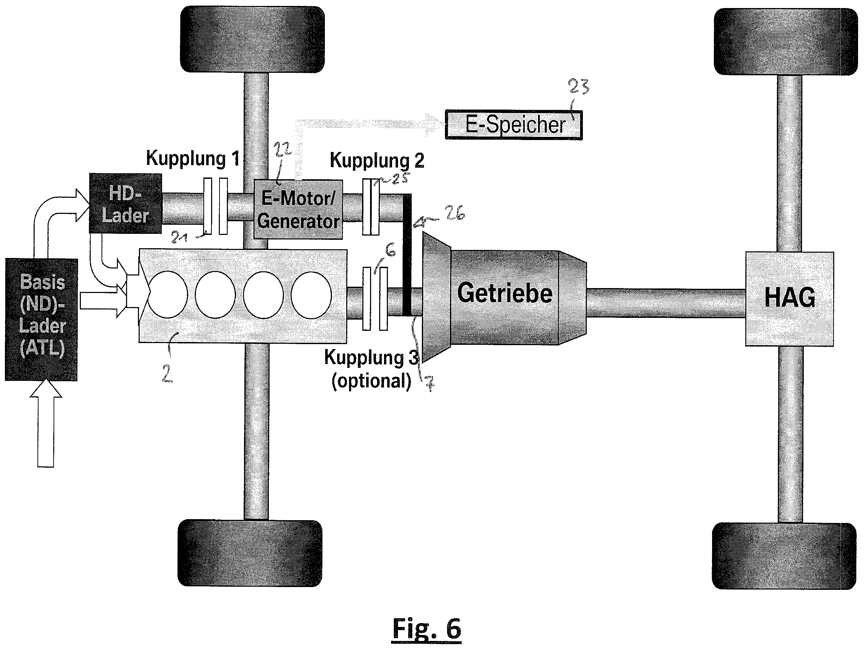

Figur 6 zeigt den Betriebszustand "Rekuperation", in dem die Kupplungen 21 und 6 geöffnet sind und die Kupplung 25 geschlossen ist. Der Verbrennungsmotor 2 ist somit vom Antriebsstrang abgekoppelt. Die im Schub- bzw. Bremsbetrieb an der Getriebeeingangswelle 7 anstehende Leistung wird über die Übersetzungsstufe 26 und die Kupplung 25 in die hier als Generator arbeitende elektrische Maschine 22 eingespeist. Die erzeugte elektrische Energie wird dann im elektrischen Speicher 23 zwischengespeichert.

## Patentansprüche

1. Fahrzeug (1), mit
- einem Verbrennungsmotor (2), der zum Antreiben eines Antriebsstrangs (7 - 13) des Fahrzeugs vorgesehen ist,
- mindestens einem Lader (19), der zur Erhöhung des Drucks der dem Verbrennungsmotor (2) zugeführten Luft vorgesehen ist,
- einer elektrischen Maschine, die drehmomentübertragend mit dem Lader (19) koppelbar bzw. gekoppelt und zum Antrieb bzw. zur Antriebsunterstützung des Laders (19) vorgesehen ist, wobei
- der Antriebsstrang (7 - 13) drehmomentübertragend mit der elektrischen Maschine (22) koppelbar bzw, gekoppelt ist, wobei zwischen dem Antriebsstrang (7-13) und der elektrischen Maschine (22) eine durch eine Kupplung gebildete zweite Kopplungseinrichtung (25)
vorgesehen ist, die zumindest einen offenen bzw. einen geschlossenen Zustand einnehmen kann, wobei im offenen Zustand der zweiten Kopplungseinrichtung (25) der Antriebsstrang (7-13) über die zweite Kopplungseinrichtung (25) von der elektrischen Maschine (22) abgekoppelt ist und im geschlossenen Zustand der zweiten Kopplungseinrichtung (25) der Antriebsstrang (7 - 13) über die zweite Kopplungseinrichtung (25) mit der elektrischen Maschine (22) gekoppelt ist,
**dadurch gekennzeichnet, dass**
• der mindestens eine Lader (19) ein zweiter Lader ist und zusätzlich dazu ein erster als Abgasturbolader ausgebildeter Lader (16) vorgesehen ist, der ebenfalls zur Erhöhung des Drucks der von dem Verbrennungsmotor (2) angesaugten Luft vorgesehen ist und
• in Strömungsrichtung der Ansaugluft nach dem ersten Lader ein Bypass so angeordnet ist, dass der zweite Lader von zumindest einem Teil der Ansaugluft bypassierbar ist.

2. Fahrzeug nach Anspruch 1, **dadurch gekennzeichnet, dass** der Antriebsstrang (7 - 13) über die elektrische Maschine (22) drehmomentübertragend mit dem Lader (19) koppelbar ist.

3. Fahrzeug nach Anspruch 1, **dadurch gekennzeichnet, dass** der Antriebsstrang (7 - 13) unter Umgehung der elektrischen Maschine (22) drehmomentübertragend mit dem Lader (19) koppelbar ist.

4. Fahrzeug nach einem der Ansprüche 1 bis 3, **dadurch gekennzeichnet, dass** zwischen dem Lader (19) und der elektrischen Maschine (22) eine erste Kopplungseinrichtung (21) vorgesehen ist, die zumindest einen offenen Zustand bzw. einen geschlossenen Zustand einnehmen kann, wobei im offenen Zustand der ersten Kopplungseinrichtung (21) die elektrische Maschine (22) über die erste Kopplungseinrichtung (21) von dem Lader (19) abgekoppelt ist und im geschlossenen Zustand der ersten Kopplungseinrichtung (21) die elektrische Maschine (22) über die erste Kopplungseinrichtung (21) mit dem Lader (19) gekoppelt ist.

5. Fahrzeug nach einem der Ansprüche 1 bis 4, **dadurch gekennzeichnet, dass** zwischen dem Antriebsstrang (7 - 13) und der elektrischen Maschine eine Übersetzungseinrichtung (26) angeordnet ist.

6. Fahrzeug nach Anspruch 5, **dadurch gekennzeichnet, dass** die Übersetzungseinrichtung (26) einen Kettentrieb und/oder einen Riementrieb und/oder mindestens eine Zahnradstufe umfasst.

7. Fahrzeug nach einem der Ansprüche 1 bis 6, **dadurch gekennzeichnet, dass** der mindestens eine Lader (19) als Verdrängerlader, insbesondere als Kompressor, ausgeführt ist.

8. Fahrzeug nach einem der Ansprüche 1 bis 6, **dadurch gekennzeichnet, dass** der mindestens eine Lader (19) als Abgasturbolader ausgeführt ist.

9. Fahrzeug nach einem der Ansprüche 1 bis 6, **dadurch gekennzeichnet, dass** mindestens eine Lader (19) als Strömungsverdichter ausgeführt ist.

10. Fahrzeug nach einem der Ansprüche 1 bis 9, **dadurch gekennzeichnet, dass** der zweite Lader (19) ein Hochdrucklader ist, der den Druck der Ansaugluft von einem ersten, durch den ersten Lader (16) erzeugten Druckniveau auf ein zweites, höheres Druckniveau erhöht.

11. Fahrzeug nach einem der Ansprüche 1 bis 10, **dadurch gekennzeichnet, dass** der Verbrennungsmotor (2) mittels einer dritten Kopplungseinrichtung (6) mit dem dem Verbrennungsmotor abgewandten Teil des Antriebsstrangs (7 - 13) koppelbar ist.

12. Fahrzeug nach einem der Ansprüche 1 bis 11, **dadurch gekennzeichnet, dass** die erste und/oder die zweite und/oder die dritte Kopplungseinrichtung eine elektromagnetische Kupplung ist.

13. Fahrzeug nach einem der Ansprüche 1 bis 12, **dadurch gekennzeichnet, dass** in elektrischer Verbindung mit der elektrischen Maschine zusätzlich ein elektrischer Energiespeicher zur Speicherung von elektrischer Energie (22) angeordnet ist.

14. Verfahren zum Betreiben eines Fahrzeugs (1), das von einer mindestens einem Lader (19) mit Luft beaufschlagten Verbrennungsmotor (2) über einen Antriebsstrang (7-13) angetrieben wird, wobei
• der Lader (19) zumindest während eines ersten Betriebszustands des Fahrzeugs (1), insbesondere während einer Beschleunigung des Fahrzeugs, von einer elektrischen Maschine (22) angetrieben wird,
• zumindest während eines zweiten Betriebszustands des Fahrzeugs (1), insbesondere während eines Schubbetriebs und/oder Bremsbetriebs des Fahrzeugs, die elektrische Maschine (22) drehmomentübertragend mit dem Antriebsstrang (7 - 13) des Fahrzeugs (1) gekoppelt wird und die elektrische Maschine während zumindest eines zeitlichen Teils des zweiten Betriebszustands generatorisch arbeitet, wobei der Antriebsstrang in dem zweiten Betriebszustand durch Schließen einer zwischen dem Antriebsstrang (7-13) und der elektrischen Maschine (22) angeordneten Kupplung (25) mit der elektrischen Maschine (22) gekoppelt wird,
**dadurch gekennzeichnet, dass**
• der mindestens eine Lader (19) ein zweiter Lader ist und zusätzlich dazu ein erster als Abgasturbolader ausgebildeter Lader (16) vorgesehen ist, wobei mittels der beiden Lader (16, 19) seriell oder parallel der Druck der dem Verbrennungsmotor (2) zugeführten Luft erhöht wird und
• in Strömungsrichtung der Ansaugluft nach dem ersten Lader ein Bypass so angeordnet ist, dass der zweite Lader von zumindest einem Teil der Ansaugluft bypassierbar ist.

15. Verfahren nach Anspruch 14, **dadurch gekennzeichnet, dass** zumindest während eines dritten Betriebszustands des Fahrzeugs, insbesondere während einer Konstantfahrt des Fahrzeugs bei niedriger Motordrehzahl des Verbrennungsmotors, der Lader (19) drehmomentübertragend mit dem Antriebsstrang (7 - 13) gekoppelt wird und über die elektrische Maschine (22) oder unter Umgehung der elektrischen Maschine (22) mechanisch vom Antriebsstrang (7 -13) angetrieben wird.

16. Verfahren nach Anspruch 14 oder 15, **dadurch gekennzeichnet,**
**dass** während eines vierten Betriebszustands des Fahrzeugs (1), insbesondere während einer Konstantfahrt und/oder Beschleunigung, die elektrische Maschine (22) drehmomentübertragend mit dem Antriebsstrang (7-13) des Fahrzeugs (1) gekoppelt wird und der Antriebsstrang (7 - 13) zumindest während eines zeitlichen Teils des vierten Betriebszustands ausschließlich von der elektrischen Maschine (22) oder unterstützend durch die elektrische Maschine (22) angetrieben wird.

## Claims

1. A vehicle (1), comprising
- an internal combustion engine (2) which is provided for driving a drive train (7-13) of the vehicle,
- at least one supercharger (19) which is provided for increasing the pressure of the air supplied to the internal combustion engine (2),
- an electric machine which can be coupled or is coupled to the supercharger (19) in a torque-transmitting manner and is provided for driving or for supporting the drive of the supercharger (19), wherein
- the drive train (7-13) can be coupled or is coupled to the electric machine (22) in a torque-transmitting manner, wherein
provided between the drive train (7-13) and the electric machine (22) is a second coupling means (25) which is formed by a coupling and which can assume at least an open and a closed state, wherein in the open state of the second coupling means (25), the drive train (7-13) is uncoupled from the electric machine (22) by the second coupling means (25) and in the closed state of the second coupling means (25), the drive train (7-13) is coupled to the electric machine (22) by the second coupling means (25),
**characterised in that**
• the at least one supercharger (19) is a second supercharger and in addition, a first supercharger (16) is provided which is configured as a turbocharger and is also provided to increase the pressure of the air suctioned in by the internal combustion engine (2), and
• arranged in the flow direction of the intake air downstream of the first supercharger is a bypass so that the second supercharger can be bypassed by at least a portion of the intake air.

2. A vehicle according to claim 1, **characterised in that** the drive train (7-13) can be coupled to the supercharger (19) by the electric machine (22) in a torque-transmitting manner.

3. A vehicle according to claim 1, **characterised in that** the drive train (7-13) can be coupled to the supercharger (19) in a torque-transmitting manner while bypassing the electric machine (22).

4. A vehicle according to any of claims 1 to 3, **characterised in that** provided between the supercharger (19) and the electric machine (22) is a first coupling means (21) which can assume at least an open state and a closed state, wherein in the open state of the first coupling means (21), the electric machine (22) is uncoupled from the supercharger (19) by the first coupling means (21) and in the closed state of the first coupling means (21), the electric machine (22) is coupled to the supercharger (19) by the first coupling means (21).

5. A vehicle according to any of claims 1 to 4, **characterised in that** a transmission means (26) is arranged between the drive train (7-13) and the electric machine.

6. A vehicle according to claim 5, **characterised in that** the transmission means (26) comprises a chain drive and/or a belt drive and/or at least one gear step.

7. A vehicle according to any of claims 1 to 6, **characterised in that** the at least one supercharger (19) is configured as a positive displacement supercharger, especially as a compressor.

8. A vehicle according to any of claims 1 to 6, **characterised in that** the at least one supercharger (19) is configured as a turbocharger.

9. A vehicle according to any of claims 1 to 6, **characterised in that** the at least one supercharger (19) is configured as a flow compressor.

10. A vehicle according to any of claims 1 to 9, **characterised in that** the second supercharger (19) is a high-pressure supercharger which increases the pressure of the intake air from a first pressure level, generated by the first supercharger (16), to a second higher pressure level.

11. A vehicle according to any of claims 1 to 10, **characterised in that** the internal combustion engine (2) can be coupled to the part of the drive train (7-13) remote from the internal combustion engine by a third coupling means (6).

12. A vehicle according to any of claims 1 to 11, **characterised in that** the first and/or the second and/or the third coupling means is an electromagnetic coupling.

13. A vehicle according to any of claims 1 to 12, **characterised in that** an electrical energy storage for storing electrical energy (22) is also arranged in electrical connection with the electric machine.

14. A method for operating a vehicle (1) which is driven by an internal combustion engine (2), charged with air of at least one supercharger (19), via a drive train (7-13), wherein
• the supercharger (19) is driven by an electric machine (22) at least during a first operating mode of the vehicle (1), especially during an acceleration of the vehicle,
• at least during a second operating mode of the vehicle (1), especially during overrun and/or during braking of the vehicle, the electric machine (22) is coupled to the drive train (7-13) of the vehicle (1) in a torque-transmitting manner, and the electric machine works in a generative manner during at least a portion of time of the second operating mode, wherein in the second operating mode, the drive train is coupled to the electric machine (22) by closing a coupling (25) arranged between the drive train (7-13) and the electric machine (22),
**characterised in that**
• the at least one supercharger (19) is a second supercharger and in addition, a first supercharger (16), configured as a turbocharger is provided, wherein the pressure of the air supplied to the internal combustion engine (2) is increased in series or in parallel by the two superchargers (16, 19), and
• arranged in the flow direction of the intake air, downstream of the first supercharger, is a bypass so that the second supercharger can be bypassed by at least a portion of the intake air.

15. A method according to claim 14, **characterised in that** at least during a third operating mode of the vehicle, especially during a constant drive of the vehicle at a low engine speed of the internal combustion engine, the supercharger (19) is coupled to the drive train (7-13) in a torque-transmitting manner, and is driven mechanically by the drive train (7-13) via the electric machine (22) or while bypassing the electric machine (22).

16. A method according to claim 14 or claim 15, **characterised in that** during a fourth operating mode of the vehicle (1), especially during a constant drive and/or acceleration, the electric machine (22) is coupled to the drive train (7-13) of the vehicle (1) in a torque-transmitting manner, and the drive train (7-13) is driven exclusively by the electric machine (22) or in a supporting manner by the electric machine (22) at least during a portion of time of the fourth operating mode.

## Revendications

1. Véhicule (1) comprenant :
- un moteur à combustion interne (2) permettant d'entraîner la ligne d'entraînement (7, 13) du véhicule,
- au moins un compresseur (19) permettant d'augmenter la pression de l'air alimentant le moteur à combustion interne (2),
- une machine électrique couplée ou pouvant être couplée au compresseur (19) en transférant le couple de rotation, et permettant d'entraîner ou d'assister l'entraînement du compresseur (19),
- la ligne d'entraînement (7, 13) pouvant être couplée ou étant couplée en transmettant le couple de rotation avec la machine électrique (22),
- entre la ligne d'entraînement (7, 13) et la machine électrique (22), étant monté un second dispositif d'accouplement (25) formé par une transmission pouvant être positionné au moins dans un état ouvert ou dans un état fermé, lorsque le second dispositif d'accouplement (25) est à l'état ouvert, la ligne d'entraînement (7, 13) étant découplée de la machine électrique (22) par ce second dispositif d'accouplement (25), et lorsque le second dispositif d'accouplement (25) est à l'état fermé, la ligne d'entraînement (7, 13) étant couplée à la machine électrique (22) par ce second dispositif d'accouplement (25),
**caractérisé en ce que**
• le compresseur (19) est un second compresseur et en plus de celui-ci il est prévu un premier compresseur (16) réalisé sous la forme d'un turbo compresseur de gaz d'échappement qui permet également d'augmenter la pression de l'air aspiré par le moteur à combustion interne (2), et
• dans la direction de circulation de l'air aspiré, en aval du premier compresseur, il est prévu une dérivation de sorte qu'au moins une partie de l'air aspiré puisse contourner le second compresseur.

2. Véhicule conforme à la revendication 1,
**caractérisé en ce que**
la ligne d'entraînement (7, 13) peut être couplée au compresseur (19) en transmettant le couple de rotation par l'intermédiaire de la machine électrique (22).

3. Véhicule conforme à la revendication 1,
**caractérisé en ce que**
la ligne d'entraînement (7, 13) peut être couplée au compresseur (19) en transmettant le couple de rotation en contournant la machine électrique (22).

4. Véhicule conforme à l'une des revendications 1 à 3,
**caractérisé en ce qu'**
entre le compresseur (19) et la machine électrique (22) il est prévu un premier dispositif d'accouplement (21) pouvant être positionné au moins dans un état ouvert ou dans un état fermé, et lorsque le premier dispositif d'accouplement (21) est à l'état ouvert, la machine électrique (22) est couplée du compresseur (19) par ce premier dispositif d'accouplement (21) et lorsque le premier dispositif d'accouplement (21) est à l'état fermé, la machine électrique (22) est couplée au compresseur (19) par ce premier dispositif d'accouplement (21).

5. Véhicule conforme à l'une des revendications 1 à 4,
**caractérisé en ce qu'**
entre la ligne d'entraînement (7, 13) et le moteur électrique est monté un dispositif de démultiplication (26).

6. Véhicule conforme à la revendication 5,
**caractérisé en ce que**
le dispositif de démultiplication (26) comprend un entraînement par chaine et/ou un entraînement par courroie et/ou au moins un étage d'engrenage.

7. Véhicule conforme à l'une des revendications 1 à 6,
**caractérisé en ce que**
le compresseur (19) est réalisé sous la forme d'un compresseur volumétrique, en particulier d'un compresseur à suralimentation.

8. Véhicule conforme à l'une des revendications 1 à 6,
**caractérisé en ce que**
le compresseur (19) est réalisé sous la forme d'un turbocompresseur de gaz d'échappement.

9. Véhicule conforme à l'une des revendications 1 à 6,
**caractérisé en ce que**
le compresseur (19) est réalisé sous la forme d'un compresseur de flux.

10. Véhicule conforme à l'une des revendications 1 à 9,
**caractérisé en ce que**
le second compresseur (19) est un compresseur haute-pression qui augmente la pression de l'air aspiré d'un premier niveau de pression obtenu par l'intermédiaire du premier compresseur (16) à un second niveau de pression plus élevé.

11. Véhicule conforme à l'une des revendications 1 à 10,
**caractérisé en ce que**
le moteur à combustion interne (2) peut être couplé par l'intermédiaire d'un troisième dispositif d'accouplement (6) avec la partie de la ligne d'entraînement (7, 13) opposée au moteur à combustion interne.

12. Véhicule conforme à l'une des revendications 1 à 11,
**caractérisé en ce que**
le premier et/ou le second et/ou le troisième dispositif d'accouplement est(sont) une (des) transmission(s) électromagnétique(s).

13. Véhicule conforme à l'une des revendications 1 à 12,
**caractérisé en ce que**
dans la liaison électrique avec la machine électrique est en outre monté un accumulateur d'énergie électrique (22) permettant d'accumuler de l'énergie électrique.

14. Procédé de commande d'un véhicule (1) qui est entraîné par l'intermédiaire d'une ligne d'entraînement (7, 13) par un moteur à combustion interne (2) alimenté en air par au moins un compresseur (19), selon lequel :
• le compresseur (19) est entraîné par une machine électrique (22) au moins pendant un premier mode de fonctionnement du véhicule (1), en particulier pendant une accélération du véhicule,
• au moins pendant un second mode de fonctionnement du véhicule (1), en particulier pendant un mode de poussée et/ou un mode de freinage du véhicule, le moteur électrique (22) est couplé en transmettant le couple de rotations avec la ligne d'entraînement (7, 13) du véhicule (1) et, pendant au moins une partie de la durée du second mode de fonctionnement, la machine électrique travaille en tant que générateur, dans le second mode de fonctionnement, la ligne d'entraînement étant couplée à la machine électrique (22) par fermeture d'une transmission (25) montée entre la ligne d'entraînement (7, 13) et le moteur électrique (22),
**caractérisé en ce que**
• le compresseur (19) est un second compresseur et en plus de celui-ci, il est prévu un premier compresseur (16) réalisé sous la forme d'un turbo compresseur de gaz d'échappement, les deux compresseurs (16, 19) permettant d'augmenter, en série ou en parallèle, la pression de l'air alimentant le moteur à combustion interne (2), et
• dans le sens de circulation de l'air aspiré, en aval du premier compresseur, il est prévu une dérivation de sorte que le second compresseur puisse être contourné par au moins une partie de l'air aspiré.

15. Procédé conforme à la revendication 14,
**caractérisé en ce qu'**
au moins pendant un troisième mode de fonctionnement du véhicule, en particulier pendant un déplacement continu du véhicule à faible vitesse de rotation du moteur à combustion interne, le compresseur (19) est couplé à la ligne d'entraînement (7, 13) en transmettant le couple et est commandé mécaniquement par la ligne d'entraînement (7, 13) par l'intermédiaire de la machine électrique (22) ou en contournant la machine électrique (22).

16. Procédé conforme à la revendication 14 ou 15,
**caractérisé en ce que**
pendant un quatrième mode de fonctionnement du véhicule (1), en particulier pendant un déplacement continu, et/ou une accélération, le moteur électrique (22) est couplé en transmettant le couple de rotation avec la ligne d'entraînement (7, 13) du véhicule et, pendant au moins une partie de la durée du quatrième mode de fonctionnement la ligne d'entraînement (7, 13) est entraînée uniquement par la machine électrique (22) ou avec assistance de la machine électrique (22).
